# EUROPEAN PATENT SPECIFICATION

(11) **EP 2 573 869 B1**
(45) Date of publication and mention of the grant of the patent: **01.02.2017**
(21) Application number: 12006584.2
(22) Date of filing: 19.09.2012
(51) Int. Cl.: H01Q 1/32

(54) **Taillight for vehicles or trailer trucks with built-in RF signal communication antenna**
Heckleuchte für Fahrzeuge oder Schlepper mit eingebauter HF-Signalkommunikationsantenne
Feu arrière pour véhicules ou camions à remorque avec antenne de communication de signal RF intégrée

(30) Priority: 22.09.2011 BR PI1106023
(43) Date of publication of application: 27.03.2013
(73) Proprietor: Silvestrini Maschio, Naira Hosana, 81750-240 CEP (BR)
(72) Inventor: Tomio, Norberto, Bairro Boqueirão - Curitiba - Paraná CEP 81750-240 (BR)
(74) Representative: Juncosa Miro, Jaime

(56) References cited:
- EP-A1- 1 501 154
- WO-A1-01/35116
- WO-A1-99/52176
- US-A1- 2002 043 939
- US-A1- 2004 246 737
- US-B1- 6 380 883

## Description

The present invention patent refers to automotive accessories in general, but more specifically to a taillight for vehicles or trailer trucks with built-in integrated RF signal communication antenna which, according to its general features, has as basic principle to enable the formation of a electromechanical type taillight with its own structure and destined to place a lighting module with lighting function and a RF communication signal antenna module with RF communication signal function regardless the signal frequency or type on the surface of automotive trailers or vehicles in general, in order to enable an extremely practical, safe and precise way to optimize the procedures for placing communication RF signal antennas and their signal transmissions in vehicles or automotive trailers, along with complete invisibility and excellent elimination of interferences in transmissions, having as a base, a taillight with great resistance, safety and versatility. With specific design and shape according to the application and of easy access for a better adaptation and safety of users, practical features in handling and functionality, under very accessible cost and, due to general characteristics and dimensions, easy to adapt to a broad range of vehicles or trailer trucks, taillights, communication modules, local and general users, regardless of the features they may present.

Currently, the RF communication modules, for example, tracking antennas of vehicles or trailer trucks broadly known for the current state of technique, are comprehended by the use of joint or single antennas for RF type signals, and they are fixed or placed close to the communication modules inside environments with simple temperature and humidity control, mostly inside the cabins, or even directly on the metallic carcass, that is, the fixation is made without any specific fixation device for them, without any kind of physical protection and in positions which leave them perfectly invisible. As such it is possible to state that the RF communication modules, especially the ones located externally are completely unprotected from weather and vandalism, stealing and mainly suffering a great number of direct interferences in the signal generated by the RF communication modules and caused by the metallic structure of vehicle or trailer trucks, in both cases generating great and dangerous disturbances for the owners of these vehicles or trailer trucks, as well as for the companies which operate them.

In the specific case of trailer trucks, for it is a very complex environment, a number of solutions are created and they are totally adaptive and not professional at all, such as, for example, not removing the antennas externally, to keep them in place and, consequently, with poor signal transmission quality. In order to avoid this signal loss, one tries to hide he whole RF communication module set inside the taillight, gaining sign for being close to the taillight frame, however, the modules become easily identifiable by thieves.

Document US2002043939 A1 discloses a marker lamp for vehicles comprising a base housing and a lens having at least two respective aligned mounting holes for fixedly attaching the lamp to the vehicle by means of screws or post. The marker lamp uses light emitting diodes installed in a LED mounting member attached to the housing as light sources, and includes a GPS antenna and/or a cellular antenna attached to the housing and located adjacent but not surrounding said LED mounting member. The lens of the marker lamp conceals both the LED mounting member and the GPS antenna and/or cellular antenna.

Documents WO 99/52176 A1 describes a vehicle light unit comprising a housing containing a light means and an antenna element providing radio signal transfer arranged on a carrier adjacent but not surrounding said light means. The light unit is mounted to the inner side of the inclined glass panel of the vehicle rear view window in order to avoid losses in light and radio signal transmission through the glass panel. Cabling from the light unit includes an antenna cable and electrical cables to the light means.

Due to the currently used structure for the RF signal communication antenna, primarily tracking device antennas used in vehicles and trailer trucks in general, it becomes vital for companies to use a totally innovative conception regarding the disposition and protection of antennas in vehicles and trailer trucks which solves these great inconveniences.

As such, the general conception of the present taillight for vehicles or trailer trucks with RF signal communication antenna, object of the present patent, is totally based on its simple and robust structure with minimum number of components and extremely simplified, safe and optimized operation, along with manufacture and practical maintenance procedures, in order to generate a practical and efficient taillight to enable a complete integration between taillight and RF signal communication antenna, that is, allowing the taillight o generate a perfect lightening in the vehicle or trailer truck's surface and the RF signal communication antenna to generate clear information transmissions of the communication module.

The present invention concerns to a taillight for vehicles or trailer trucks with built-in RF signal communication antenna, which is one complete taillight which comprises the features set out in claim 1.

As such, the device of the invention was created with very well established goals, such as: hide the RF signal antennas, in order to make them invisible for people in general; eliminate the interference of the metallic structure of vehicles or trailer trucks in the RF signal communication antenna transmissions, making them clear and safe; and increasing the protection of RF signal communication antennas against the weather and matter impacts, to increase their life cycle.

The present invention gathers components and processes in a singular conception, which will meet several demands of the nature of its use, that is, to integrate the taillight and the RF signal communication antenna, primarily a tracking antenna used in vehicles or trailer trucks in general. This conception ensures a taillight with great efficiency, functionality, resistance, durability, safety, versatility, precision, cost saving and ergonomics due to the excellent added technical qualities, which promote advantages and improvements in the applications and operation of RF signal communication antennas of vehicles or trailer trucks, and which general features differ from the shapes and models of RF signal communication antennas broadly known currently.

The present invention consists in the use of a modern, efficient, safe and functional lantern for vehicles and trailer trucks with built-in RF signal communication antenna formed by a set of correctly integrated electronic and vehicle set of solutions, creating a complete and singular taillight with its own design, details of fine finishing and proper features, which incorporated its own electromechanical structure, highly durable and resistant and with a perfectly integrated and symmetrically disposed base as taillight fixation element on the vehicle or trailer truck, a set of fixing devices to fix the base on the vehicle or trailer truck, a lighting module as taillight lighting element in the vehicle or trailer truck, an antenna module as signal transmission element and a lens as protection and reflection element of the taillight in the vehicle or trailer truck, in order to enable the formation of a unique set, complete and safe, whose internal and external forms and dispositions enable the perfect adapting to the most diverse types of vehicles or trailer trucks and RF signal communication antennas, being especially designed for these purposes with proper geometry.

The current device is based on the application of components and processes in a differentiated conception without, however, reaching a high degree of sophistication and complexity, enabling it to solve some of the main inconveniences of other forms and models known by the current technique and employed in the placement of RF signal communication antennas in vehicles and trailer trucks in general, which are located in a work area in which use and application difficulties, low efficiency and performance and accidents are very frequent and the ways and/or models are based on simple adaptations, of high level unsafety, great deterioration and frailty, very little durability and resistance, low versatility, completely imprecise, of difficult application, very low output and performance, high interference or sometimes they are big in size, having elevated cost, volume and weight, low flexibility, complex handling, high maintenance, great waste of time, complex manufacture and low performance.

The goals, advantages and other important features of the present invention may be more easily understood when read along with the annexed Figures, in which:

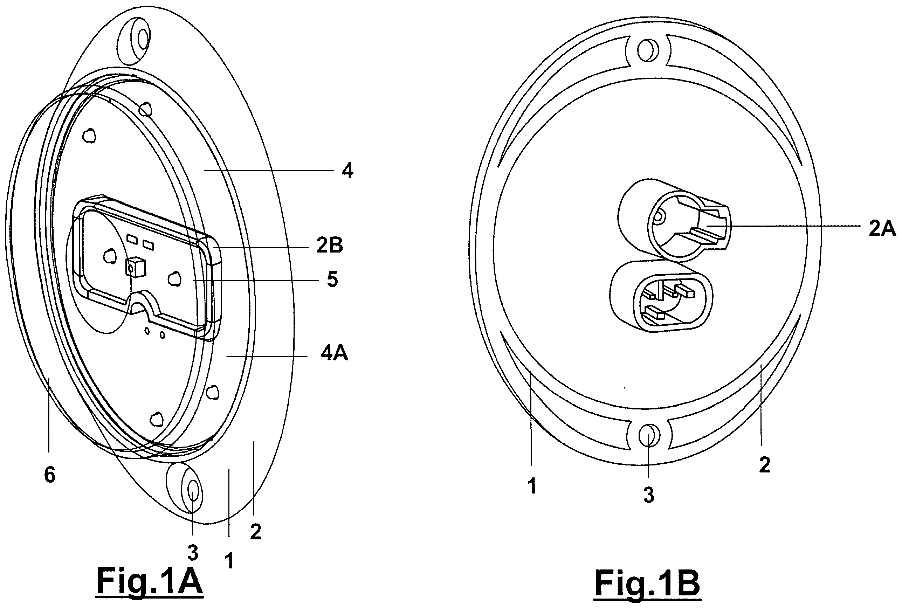

Figure 1A represents a frontal perspective view of the taillight for vehicles or trailer trucks with built-in RF signal communication antenna.
Figure 1B represents a posterior perspective view of the taillight for vehicles or trailer trucks with built-in RF signal communication antenna.

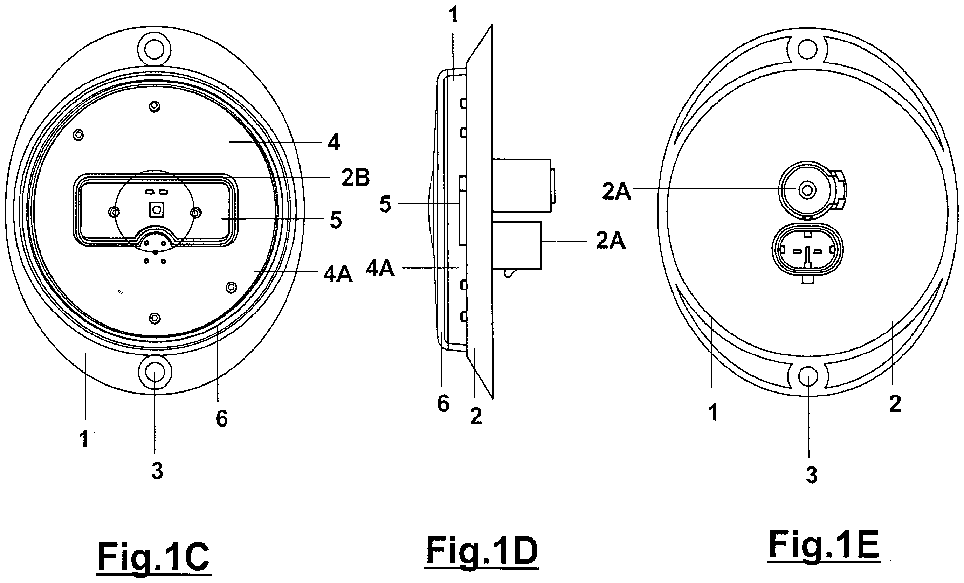

Figure 1C represents a frontal view of the taillight for vehicles or trailer trucks with built-in RF signal communication antenna.
Figure 1D represents a lateral view of the taillight for vehicles or trailer trucks with built-in RF signal communication antenna.
Figure 1E represents a posterior view of the taillight for vehicles or trailer trucks with built-in RF signal communication antenna.

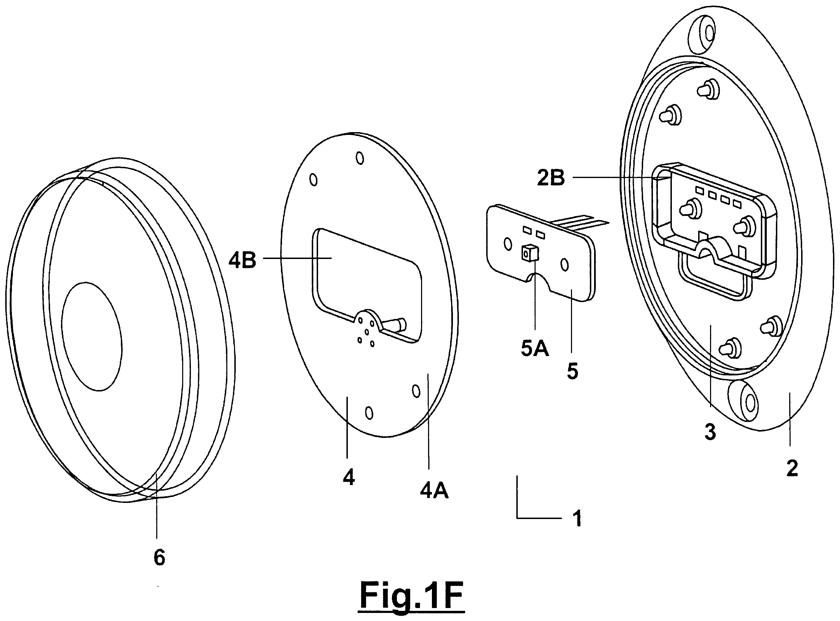

Figure 1F represents an exploded frontal perspective view of the taillight for vehicles or trailer trucks with built-in RF signal communication antenna.

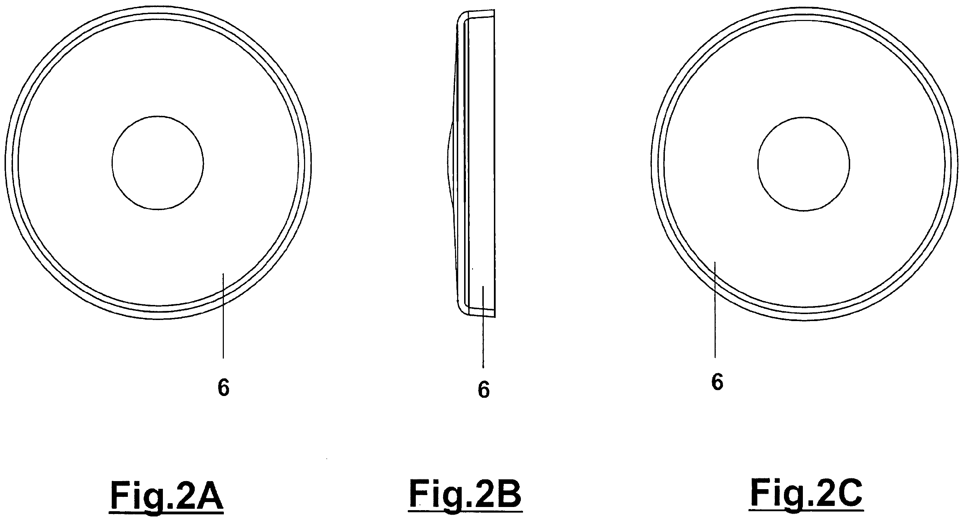

Figure 2A represents a frontal view of the transparent lens of the taillight for vehicles or trailer trucks with built-in RF signal communication antenna.
Figure 2B represents a lateral view of the transparent lens of the taillight for vehicles or trailer trucks with built-in RF signal communication antenna.
Figure 2C represents a posterior view of the transparent lens of the taillight for vehicles or trailer trucks with built-in RF signal communication antenna.

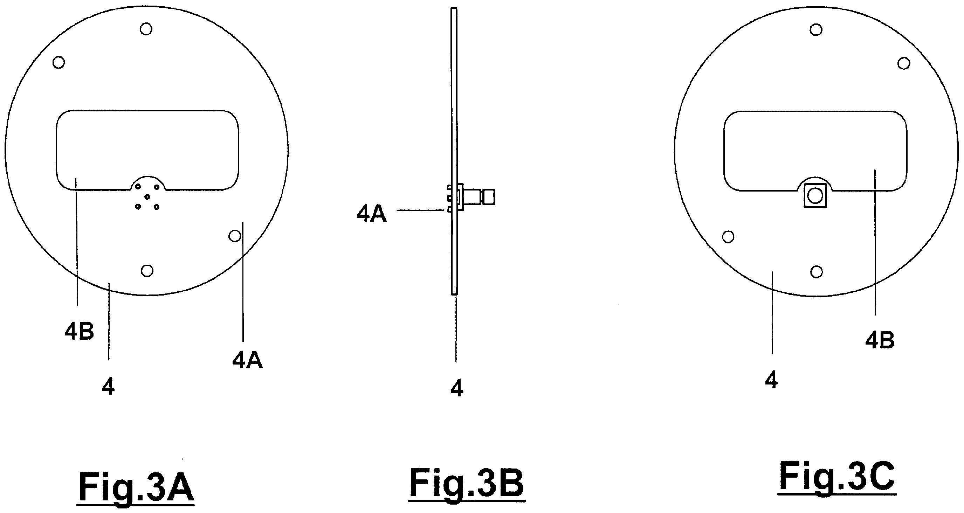

Figure 3A represents a frontal view of the antenna module of the taillight for vehicles or trailer trucks with built-in RF signal communication antenna.
Figure 3B represents a lateral view of the antenna module of the taillight for vehicles or trailer trucks with built-in RF signal communication antenna.
Figure 3C represents a posterior view of the antenna module of the taillight for vehicles or trailer trucks with built-in RF signal communication antenna.

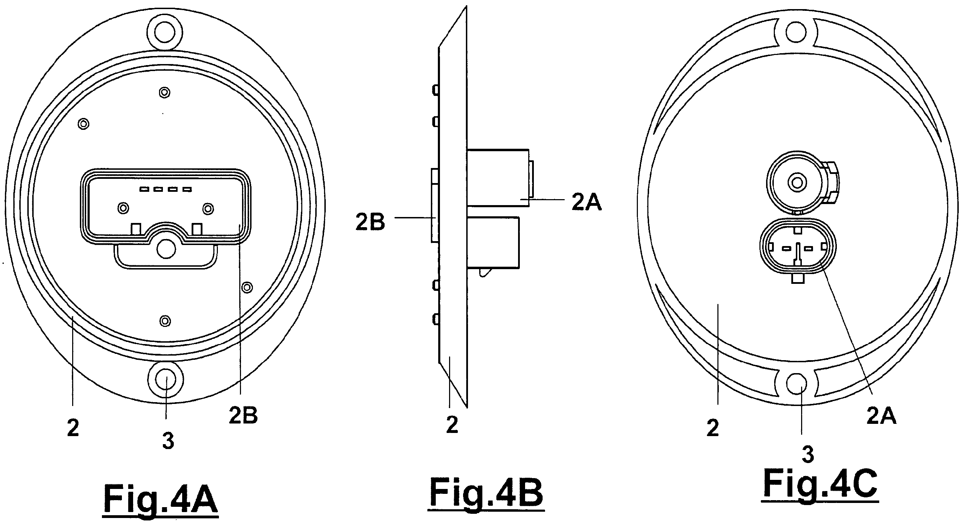

Figure 4A represents a frontal view of the base of the taillight for vehicles or trailer trucks with built-in RF signal communication antenna.
Figure 4B represents a lateral view of the base of the taillight for vehicles or trailer trucks with built-in RF signal communication antenna.
Figure 4C represents a posterior view of the base of the taillight for vehicles or trailer trucks with built-in RF signal communication antenna.

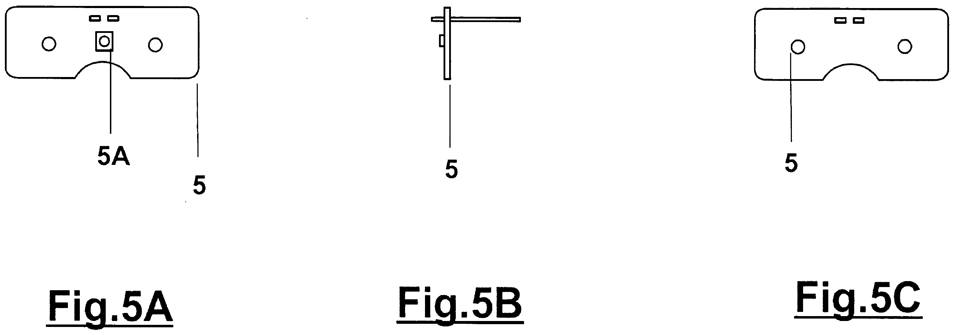

Figure 5A represents a frontal view of the lighting module of the taillight for vehicles or trailer trucks with built-in RF signal communication antenna.
Figure 5B represents a lateral view of the lighting module of the taillight for vehicles or trailer trucks with built-in RF signal communication antenna.
Figure 5C represents a posterior view of the lighting module of the taillight for vehicles or trailer trucks with built-in RF signal communication antenna.

As can be inferred in the annexed Figures which illustrate and integrate the present descriptive report of the invention for "Taillight For Vehicles or Trailer Trucks With Built-In RF Signal Comnunication Antenna", Figure (1A) it is a general presentation, comprised by a complete taillight (1) with its own features, incorporating its own specific electromechanical structure, of high durability and resistance internal and external shapes and disposition adapting to the most varied types of vehicles or trailer trucks and RF communication module, perfectly integrated and symmetrically placed on a base (2) placed vertically and symmetrically in the whole extension of the posterior face of the taillight (1) and parallel to the surface of the vehicle or trailer truck and having a set of connectors (2A) placed vertically, perpendicularly and symmetrically spaced on the posterior face of the base (2) and a set of packers and clutches (2B) placed parallel and symmetrically spaced on the anterior-internal face of the base (2), to close the taillight, fastening in the vehicle or trailer truck body and electronic connection interface; a set of fasteners (3) placed horizontally and symmetrically spaced and trespassing the base (2) and the vehicle or trailer truck surface, as taillight fasteners (1) on the vehicle or trailer truck body; a RF signal communication antenna (4) placed vertically, parallel and symmetrically fixed in the anterior-internal extension of the base (2) and having an integrated circuit board (4A) and a set of openings (4B) placed parallel and symmetrically spaced in the RF signal communication antenna module (4) as transmitter/receptor of the RF; one lighting module (5) placed vertically and symmetrically fit on the internal-anterior face of the base (2) through the central packer (2B) and having an integrated circuit board (5A) with lighting signals, as the light beam generator; and a lens (6) placed vertically and symmetrically in the whole extension of the frontal part of the taillight (1) and fastened by its posterior-lateral extremities on the anterior-lateral extremities of the base (2) as a light beam diffuser.

The taillight for vehicle or trailer trucks with built-in RF signal communication antenna, according to the application needs, may be used with the most varied geometry types such as, for example, circular, rectangular, square, triangular and elongated, among others, primordially according to the design of the vehicle or trailer truck in which it will be used, keeping all features inherent to the taillight (1).

The taillight for vehicle or trailer trucks with built-in RF signal communication antenna may use any type of taillight such as, for example, regular taillights, brake lights, and it also may be installed in any type of vehicle such as, for example, boats, forklifts, trailers, trains and semi-tow trucks; and any type of communication such as, for example, GPS, GPRS and satellite. In both cases keeping all the inherent features of the taillight (1) of involved vehicles.

The taillight for vehicle or trailer trucks with built-in RF signal communication antenna has all its components completely integrated and, therefore, can be rapidly assembled and disassembled, it does not lose parts and none of the parts is subject to breaking or twisting; this ensures a high level of performance and efficiency, with greater durability and absolute safety. After being completely assembled and connected to the vehicle or trailer truck surface, the components become tightly fastened, preventing any individual component to fall apart when in use, and the set becomes totally available to perform the procedures of lighting and RF signal communication transmission of the vehicles or trailer trucks. As such, the taillight (1) can be used without any concern of any nature, especially regarding the durability and safety of its components and the safety of the users.

This explanation shows that it is a vehicular accessory which will be well received by vehicle or trailer truck users, as well as traceability companies in general, for the taillight for vehicle or trailer trucks with built-in RF signal communication antenna presents various advantages, such as: great safety, reliability and agility in the application; great output and performance in its application due to its general conception; high comfort, convenience and safety for users; very high resistance and general durability with little or no wearing of the set as a whole; totally accessible costs providing a great cost/benefit relation; practical and safe use by any user; broad range; very little maintenance; perfect and direct adaptation to the most types of vehicles or trailer trucks, as well as RF signal communication antennas and trackers; high operational precision; high elimination of interferences in the transmissions; great mobility and flexibility of the set; weight and general dimensions totally compatible; complete operational ergonomics; complete invisibility of the RF signal communication antenna; and the guarantee to have a taillight-antenna set in accordance to all existing legislations and norms and the basic conditions required for its application as a whole.

All these attributes allow the classification of the taillight for vehicle or trailer trucks with built-in RF signal communication antenna as a totally versatile, efficient, practical and safe means for the most diverse types of external lighting of a vast range of vehicles or trailer trucks in general, as well as the most diverse types of information transmissions, mainly for a vast range of tracking devices in the most diverse locations, regardless of the general features they may present, being also of easy application and handling with great performance and excellent general features; however, the measures, dimensions and quantities may vary according to the general requirements of each application.

## Claims

1. Taillight for vehicles or trailer trucks with built-in RF signal communication antenna, being one complete taillight (1) which comprises:
- a structure containing a base (2), the base comprising an anterior-internal face and a posterior face by means of which the base is attached to a surface of a vehicle or trailer truck,
- a receiving housing (2B) placed at an anterior-internal face of said base (2);
- a lighting module (5), having an integrated circuit board (5A) with lighting signs, fit into said receiving housing (2B) of the anterior-internal face of the base (2) and;
- an RF signal communication antenna module (4) fit to the anterior-internal face of the base (2) ; and
- a lens (6) attached to the base (2) covering said lighting module (5) and RF signal communication antenna module (4);
said lens (6) is placed vertically, parallel and symmetrically in the extension of the front part of the taillight (1) and fastened by its posterior-lateral extremities into the anterior-lateral extremities of the base (2); 15 **characterized in that**:
said receiving housing is symmetrically disposed and built-in said base (2) placed vertically and symmetrically in a whole extension of a posterior face of the taillight (1) and parallel to the surface of the vehicle or trailer truck;
said RF signal communication antenna module (4) has an integrated circuit board (4A) surrounding said receiving housing (2B), and comprises at least one opening (4B) dimensioned to surround the external perimeter of said receiving housing (2B);
said RF signal communication antenna module (4) is placed vertically, parallel and symmetrically fit through the whole extension of the anterior-internal face of the base (2) and said integrated circuit board (4A) comprises a set of said openings placed parallel and symmetrically spaced in the RF signal communication antenna module (4);
wherein said receiving housing (2B) is centrally arranged in said anterior-internal face of the base (2), constituting a central packer;
said lighting module (5) is placed vertically and symmetrically fit in the anterior-internal face of the base (2) through said central packer (2B); and
wherein said base (2) has a set of connectors (2A) placed vertically, perpendicularly and symmetrically spaced on the posterior face of the base (2) and a set of packers and clutches (2B), including the one constituting said receiving housing, placed in parallel and symmetrically spaced in the anterior-internal face of the base (2).

2. The taillight of any of the previous claims, wherein said base (2) has a set of fasteners to be introduced through a corresponding set of through holes (3) placed horizontally and symmetrically spaced trespassing the base (2) when align with corresponding holes made at the vehicle or trailer truck surface.

## Patentansprüche

1. Heckleuchte für Fahrzeuge oder Schlepper mit eingebauter HF-Signalkommunikationsantenne, wobei sie eine komplette Heckleuchte (1) ist, umfassend:
- eine Struktur, welche eine Basis (2) enthält, wobei die Basis eine vordere Innenfläche und eine hintere Fläche umfasst, mittels welcher die Basis an einer Oberfläche eines Fahrzeugs oder Schleppers befestigt ist,
- ein Aufnahmegehäuse (2B), welches sich in einer vorderen Innenfläche der genannten Basis (2) befindet;
- ein Beleuchtungsmodul (5), welches eine integrierte Leiterplatte (5A) mit Beleuchtungszeichen aufweist, in dem genannten Aufnahmegehäuse (2B) der vorderen Innenfläche der Basis (2) eingebaut, und;
- ein HF-Signalkommunikationsantennenmodul (4), an die vordere Innenfläche der Basis (2) angepasst; und
- eine an der Basis (2) befestigten Linse (6), welche das genannte Beleuchtungsmodul (5) und das genannte HF-Signalkommunikationsantennenmodul (4) abdeckt,
wobei sich die genannte Linse (6) vertikal, parallel und symmetrisch auf der Erstreckung des Vorderteils der Heckleuchte (1) befindet und durch deren hinteren seitlichen Enden an den vorderen seitlichen Enden der Basis (2) befestigt ist; **dadurch gekennzeichnet, dass**
das genannte Aufnahmegehäuse in der Basis (2) symmetrisch angeordnet und integriert ist, und sich vertikal und symmetrisch auf einer gesamten Erstreckung einer hinteren Fläche der Heckleuchte (1) und parallel zur Oberfläche des Fahrzeugs oder Schleppers befindet;
das genannte HF-Signalkommunikationsantennenmodul (4) eine das genannte Aufnahmegehäuse (2B) umgebende integrierte Leiterplatte (4A) aufweist, und mindestens eine Öffnung (4B) umfasst, welche derart bemessen ist, dass sie den Außenumfang des genannten Aufnahmegehäuses (2B) umgibt;
das genannte HF-Signalkommunikationsantennenmodul (4) sich vertikal, parallel und symmetrisch angepasst über die gesamte Erstreckung der vorderen Innenfläche der Basis (2) befindet und die genannte integrierte Leiterplatte (4A) einen Satz von den genannten Öffnungen (4B) umfasst, welche sich im HF-Signalkommunikationsantennenmodul (4) parallel und in symmetrischen Abständen befinden;
wobei das genannte Aufnahmegehäuse (2B) in der genannten vorderen Innenfläche der Basis (2) mittig angeordnet ist, unter Bildung eines zentralen Drückelements;
das genannte Beleuchtungsmodul (5) sich vertikal und symmetrisch angepasst in der vorderen Innenfläche der Basis (2) durch das genannte zentrale Drückelement (2B) befindet; und
wobei die genannte Basis (2) einen Satz von Verbindungsstücken (2A) aufweist, welche sich vertikal, senkrecht und in symmetrischen Abständen auf der hinteren Fläche der Basis (2) befinden, und einen Satz von Drückelementen und Kopplungselementen (2B) aufweist, enthaltend dasjenige, welches das genannte Aufnahmegehäuse bildet, sich parallel und in symmetrischen Abständen auf der vorderen Innenfläche der Basis (2) befindend.

2. Heckleuchte nach einem der vorhergehenden Ansprüche, wobei die genannte Basis (2) einen Satz von Befestigungselementen aufweist, für deren Einführung durch einen entsprechenden Satz von Durchgangslöchern (3), welche sich horizontal und in symmetrischen Abständen befinden und die Basis (2) durchdringen, wenn sie mit entsprechenden, an der Oberfläche des Fahrzeugs oder Schleppers durchgeführten Löchern fluchten.

## Revendications

1. Feu arrière pour des véhicules ou des camions tracteurs ayant une antenne intégrée pour la communication de signaux HF, un feu arrière complet (1) comportant:
- une structure contenant une base (2), la base comportant une face antéro-interne et une face postérieure au moyen desquelles la base est fixée à une surface d'un véhicule ou d'un camion tracteur,
- un réceptacle de réception (2B) placé sur une face antéro-interne de cette base (2);
- un module d'éclairage (5) ayant une carte de circuit intégré (5A) ayant des signaux lumineux aménagés à l'intérieur de ce réceptacle de réception (2B) de la face antéro-interne de la base (2) et;
un module d'antenne de communication de signaux HF (4) aménagé sur la face antéro-interne de la base (2); et
- un objectif (6) fixé à la base (2) couvrant ce module d'éclairage (5) et un module d'antenne de communication de signaux HF (4):
cet objectif (6) est placé verticalement parallèle et symétriquement dans l'extension de la partie avant du feu arrière (1) et fixé par ses extrémités postéro-latérales à l'intérieur des extrémités antéro-latérales de la base (2) ;
**caractérisé en ce que** :
ce réceptacle de réception est disposé symétriquement et il est intégré dans cette base (2) placée verticalement et symétriquement sur toute l'extension d'une face postérieure du feu arrière (1) et parallèle à la surface du véhicule ou du camion porteur;
ce module d'antenne de communication de signaux HF (4) possède une carte de circuit intégré (4A) entourant ce réceptacle de réception (2B) et comporte également au moins une ouverture (4B) dimensionnée pour entourer le périmètre extérieur de ce réceptacle de réception (2B);
ce module d'antenne de communication de signaux HF (4) est placé verticalement, parallèle et symétriquement aménagé sur toute l'extension de la face antéro-interne de la base (2) et cette carte de circuit intégré (4A) comporte un jeu de ces ouvertures placées parallèles et symétriquement écartées dans le module (4) d'antenne de communication de signaux HF.
dans lequel ce réceptacle de réception (2B) est centralement aménagé sur cette face antéro-interne de la base (2) constituant un réceptacle central;
ce module d'éclairage (5) est placé verticalement et symétriquement aménagé sur la face antéro-interne de la base (2) à travers ce réceptacle central (2B); et
où cette base (2) possède un jeu de connecteurs (2A) placés verticalement, perpendiculairement et symétriquement écartés sur la face postérieure de la base (2) et un jeu de réceptacles et de crampons (2B), comprenant celui qui constitue ce réceptacle de réception, placés parallèles et symétriquement écartés sur la face antéro-interne de la base (2).

2. Le feu arrière d'une quelconque des revendications précédentes où cette base (2) possède un jeu d'éléments de fixation à introduire à travers un jeu correspondant de trous traversants (3) situés horizontalement et symétriquement écartés dépassant la base (2) lorsqu'ils sont alignés aux trous correspondants percés sur la surface du véhicule ou du camion porteur.
